# EUROPEAN PATENT APPLICATION

(11) **EP 4 503 507 A1**
(43) Date of publication of application: **05.02.2025**
(21) Application number: 24187944.4
(22) Date of filing: 11.07.2024
(51) Int. Cl.: H04L 9/32

(54) **MEMS-BASED PHYSICALLY UNCLONABLE FUNCTION (PUF) FOR MECHANICAL TRUST EXTENSION**

(30) Priority: 01.08.2023 US 202363516949 P; 10.05.2024 US 202418661416
(71) Applicant: Honeywell International Inc., Charlotte, NC 28202 (US)
(72) Inventor: TUCKER, James L., Charlotte, 28202 (US); HEFFNER, Kenneth H., Charlotte, 28202 (US); COUSSEAU, Peter L., Charlotte, 28202 (US); WIENKES, Lee R., Charlotte, 28202 (US); HORKHEIMER, Donald Patrick, Charlotte, 28202 (US)
(74) Representative: Haseltine Lake Kempner LLP

(57) **Abstract**

A system is provided. The system includes a physical unclonable function (PUF) circuit having an input, an output and an embedded microelectromechanical system (MEMS) device; and an interface, coupled to the PUF circuit, and being configured to be coupled to a mechanical structure; wherein the embedded MEMS device is configured to detect a parameter or characteristic associated with the mechanical structure and to provide an input to the PUF circuit based on the detected parameter, whereby the PUF circuit uses the input from the embedded MEMS device to extend trust to the mechanical structure.

## Description

### CROSS-REFERENCE TO RELATED APPLICATIONS

This application claims priority to U.S. Provisional Application No. 63/516,949, filed on August 1, 2023, and titled "DUAL USE MICROELECTROMECHANICAL SYSTEM (MEMS) DEVICE," the contents of which are incorporated by reference herein in their entirety.

This application is related to: United States Patent Application serial number 18/661,373 (attorney docket number H232672-US2) entitled "DUAL USE MICROELECTROMECHANICAL SYSTEM (MEMS) DEVICE" filed on even date herewith; United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE" filed on even date herewith; United States Patent Application serial number 18/661,426 (attorney docket number H233694-US) entitled "ACTIVE TRANSISTOR PHYSICAL UNCLONABLE FUNCTION (PUF) CIRCUIT WITH MEMS UNIQUENESS" filed on even date herewith; United States Patent Application serial number 18/661,437 (attorney docket number H233699-US) entitled "ACTIVE TRANSISTOR RANDOM NUMBER GENERATOR (RNG) CIRCUIT WITH MEMS ENTROPY" filed on even date herewith; all of which are incorporated herein by reference in their entirety.

### BACKGROUND

A Physically Unclonable Function (PUF) is a physical object that for a given input and conditions (challenge) provides a physically defined "digital fingerprint" output (response) that serves as a unique identifier. PUFs are commonly used with semiconductor devices such as microprocessors, field programmable gate arrays (FPGAs), and other integrated circuits. The digital fingerprint of a particular PUF is based on unique variations from device-to-device occurring naturally during the semiconductor manufacturing process. PUFs are beneficial in applications with high security requirements such as cryptography, Internet of Things (IoT) devices, and privacy protection. However, there are many systems and structures that would benefit from PUF-like protection that are not conducive to work with a conventional PUF circuit.

Thus, there is a need in the art for methods and systems that extend the reach and benefit of PUFs to other systems and environments.

### SUMMARY

A system is provided. The system includes a physical unclonable function (PUF) circuit having an input, an output and an embedded microelectromechanical system (MEMS) device; and an interface, coupled to the PUF circuit, and being configured to be coupled to a mechanical structure; wherein the embedded MEMS device is configured to detect a parameter or characteristic associated with the mechanical structure and to provide an input to the PUF circuit based on the detected parameter, whereby the PUF circuit uses the input from the embedded MEMS device to extend trust to the mechanical structure.

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 is a block diagram of one embodiment of a system that includes a Physically Unclonable Function (PUF) circuit that includes an embedded microelectromechanical system (MEMS) device to extend the trust of the PUF circuit to an attached mechanical structure.
FIG. 2 is a block diagram of another embodiment of a system that includes a PUF circuit with an embedded MEMS device that implements a security seal for a structure.
FIG. 3 is a block diagram of another embodiment of a system with a mechanical assembly that includes a PUF circuit with an embedded MEMS that is enabled to extend the trust of the PUF circuit to the mechanical assembly.
FIG. 4 is a block diagram of another embodiment of a system that includes a PUF circuit with a plurality of embedded MEMS devices to extend the trust of the PUF circuit to an attached mechanical structure.
FIG. 5A is a perspective view of one embodiment of a PUF circuit with an embedded MES device wherein the PUF circuit has a Swiss cheese pattern of openings in the structure of the PUF circuit.
FIG. 5B is a perspective view of the PUF circuit of FIG. 5A embedded in potting material and attached to a mechanical structure.
FIG. 6 is a flow chart of one embodiment of a method for extending trust of a Physically Unclonable Function (PUF) circuit to a mechanical structure.
FIG. 7 is a block diagram of one embodiment of a system that provides secure communication between nodes that implement a PUF circuit with an embedded MEMS device that extends trust to a mechanical system.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention extend the trust associated with a Physically Unclonable Function (PUF) circuit to hardware and other systems and objects. Such embodiments provide solutions, incorporated into hardware systems, that can provide assurance of the identity of physical hardware. This capability provides, for example, the means to improve the ability to meet and maintain network integrity. Embodiments of the present invention provide systems that can be integrated into an electronic system via mounting, packaging, and potting that provide a unique digital identification to the software, such that physical changes will permanently change the resulting digital identification. The identity can then be encoded into the cryptographic processes of the hardware system. Embodiments of the present invention validate the identity of hardware so that altering hardware changes the identifier.

Embodiments of the invention are made by creating a micro-electromechanical system (MEMS) sensor or device that is designed to change its device RLC (resistance, capacitance and inductance) properties in response to physical properties (such as the physical stress of mounting). Based on the physical properties, embodiments of the present invention develop a unique output from a physically unclonable function (PUF) circuit that can uniquely identify the sensor instance. Embodiments of the present invention ensure that the output of the PUF circuit changes permanently based on alteration, and that the output of the PUF circuit is unique to each instance. Additionally, the PUF circuit is unpredictable providing unique output while generating a PUF output that is stable across expected product environments including aging, temperature, motion, and the like. The idea of extending trust, comes from the concept of using the MEMS device as a sensor that can be affected by the surfaces that it is attached to, such that the surface that the MEMS device is attached to has its identity protected because, the MEMS device in the PUF circuit is able to detect changes to the surface.

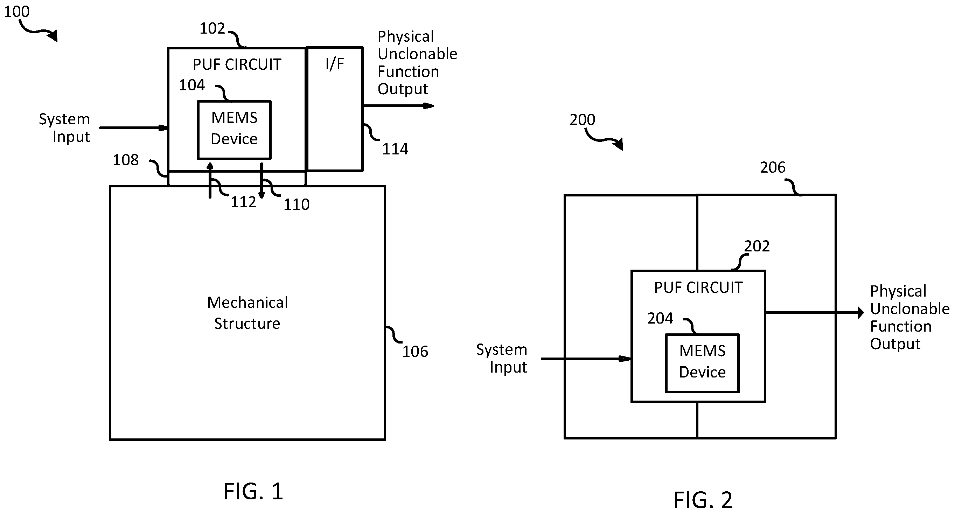

FIG. 1 is a block diagram of one embodiment of a system 100 that includes a Physically Unclonable Function (PUF) circuit 102. PUF circuit 102 includes an embedded microelectromechanical system (MEMS) device 104 to extend the trust of PUF circuit 102 to a mechanical structure 106 that is attached to PUF circuit 102 via interface 108. By way of example, and not by way of limitation, mechanical structure 106 may include an airframe or other components of an aircraft or other vehicle, a motor, an engine, a power plant, a flywheel or generator, bearings, an electronic device, glass (window), or any other structure that has a characteristic for which a MEMS device could detect a change in that characteristic. PUF circuit 102 extends trust to mechanical structure 106 by being able to detect, for example, failure of the structure, the integrity of the structure, whether the structure has been tampered with, changes in proximity of the structure, breakage of the structure, or sounding an alarm when the structure is moved without authorization. In some embodiments, PUF circuit 102 incorporates aspects of PUF circuits described in co-pending applications with serial numbers _ and _ (attorney docket numbers H233692-US and H233694-US), both of which are incorporated by reference above.

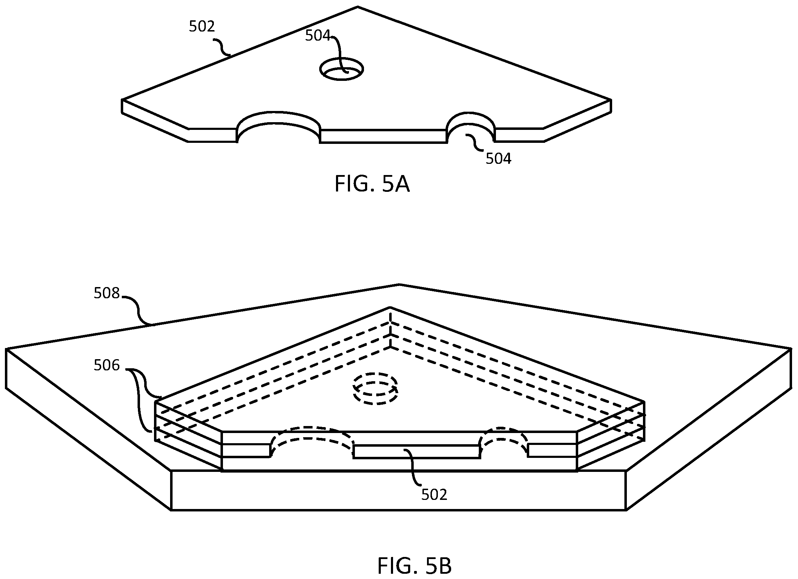

Interface 108 includes any number of mechanisms for attaching PUF circuit 102 to mechanical structure 106. For example, interface 108 includes different types of adhesives, potting materials, welding, and other conventional methodologies to establish a physical relationship between components or objects of a system together with trust extended from PUF circuit 102. In one embodiment, PUF circuit 102 is designed to be embedded in potting material. In this example, PUF circuit 102 includes a structure with a Swiss Cheese pattern, such as shown and described below with respect to FIGs. 5A and 5B., with openings that enable PUF circuit 102 to be embedded in contact with the sides, front, back and through the mechanical structure 106.

Advantageously, PUF circuit 102 includes MEMS device 104 that is sensitive to some characteristic or parameter of the environment of mechanical structure 106 so that MEMS device 104 can detect changes in mechanical structure 106. Further, MEMS device 104 may be sensitive to physical placement and modification of mechanical structure 106. For example, if mechanical structure 106 is removed and replaced, the output of MEMS device 104 will change and the output of PUF circuit 102 will also change indicating a problem with mechanical structure 106.

In the embodiment shown in FIG. 1, a single PUF circuit 102 is shown attached to mechanical structure 106. In other embodiments, a plurality of PUF circuits 102 may be attached to mechanical structure 106 through interface 108. Advantageously, by including a MEMS device 104 in each PUF circuit 102, an operator can later qualify an additional one of the PUFs 102 as being in-family by seeing if the output of the additional PUF circuit 102 and MEMS device 104 are the same as previously displayed by the prior PUF circuit 102/MEMS device 104 under the influence of the environment applied. It is noted that this is information that only the PUP/MEMS group users would know.

PUF circuit 102 receives a system input and produces a physical unclonable function output. Additionally, PUF circuit 102 receives input through MEMS device 104 from mechanical structure 106. PUF circuit 102 provides a correct response as the PUF output if mechanical structure 106 is attached to PUF circuit 102, unaltered and functioning properly from the perspective of MEMS device 104. If MEMS device 104 detects a change, the output of PUF circuit 102 would also change thereby indicating a problem with mechanical structure 106.

By way of example and not by way of limitation, MEMS device 104 may be sensitive to temperature, vibration, pressure, motion or any other characteristic or parameter of mechanical structure 106. In such an instance, MEMS device 104 will create unique outputs based on its response to specific characteristics, parameters, placement or modification of mechanical structure 106.

In one non-limiting example, MEMS device 104 is vibration sensitive and PUF circuit 102 with MEMS device 104 is mounted on a mechanical structure 106 such as an engine. In this embodiment, MEMS device 104 will create unique outputs based on the attached engine. If a sparkplug or other component in the engine fails, for example, that would change the output of MEMS device 104 which would be detected and reported by PUF circuit 102. This is because the output of MEMS device 104 is changed from the perspective of PUF circuit 102 due to the data that is harvested from MEMS device 104. In other embodiments, mechanical structure 106 can be any appropriate mechanical component of a system that could benefit from PUF-like protection.

In other embodiments, MEMS device 104 is enabled to generate small mechanical signals, e.g., vibration, heat, or acoustic, and measure a response from the mechanical structure 106 to the small mechanical signal. For example, MEMS device 104 may initiate a vibration signal 110 that is injected into mechanical structure 106. Mechanical structure 106 responds to the vibration signal 110 from MEMS device 104. Further, MEMS device 104 measures the response 112 to the vibrational signal 110 as an input to PUF circuit 102. The vibration signal 110 from MEMS device 104 would resonate differently based on the types of materials, mass, and other mechanical properties of mechanical structure 106 to have an identifiable effect on the PUF result from PUF circuit 102.

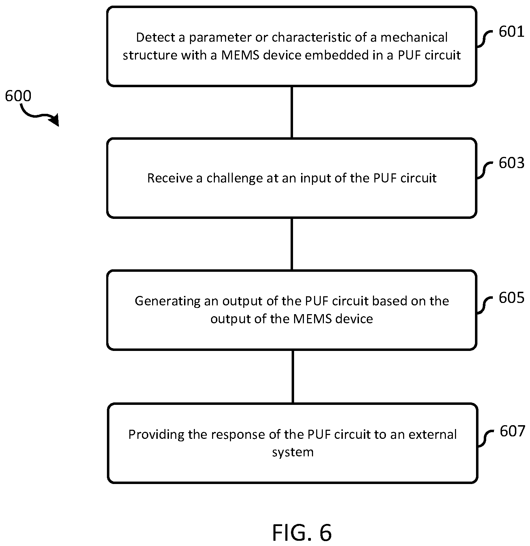

In other embodiments, PUF circuit 102 is designed to be coupled to other circuits via permanent or temporary electrical connections at interface (I/F) 114. Interface 114 includes any appropriate circuit for providing communication between PUF circuit 102 and an external system. As such, interface 114 includes one or more of capacitive coupling, inductive coupling, wired coupling and radio frequency coupling. In one example, PUF circuit 102 can be coupled to RF ID tags to allow for wireless reading of PUF responses to check the health of mechanical structure 106. PUF circuit 102 can be wired into mechanical installations such as in the engine example, where PUF circuit 102 provides different states based on the state of the engine. FIG. 6 also provides an example of interface 114 in a system with a plurality of node associated with PUF circuits having embedded MEMS devices.

FIG. 2 is a block diagram of another embodiment of a system 200 that includes a PUF circuit 202 with an embedded MEMS device 204 that implements a security seal for a structure 206. In this embodiment, structure 206 is a package or other object that is sealed to protect its contents from disclosure except to a designated party. PUF circuit 202 validates the security seal status based on inputs from embedded MEMS device 204. MEMS device 204 is chosen to be able to detect appropriate changes to a characteristic or property of the security seal for structure 206 to be able to detect tampering with or breaking the seal on structure 206. For example, the characteristic or property of the security seal could be a mechanical or electrical property of an adhesive or foil associated with the security seal that is detectable by the MEMS device 204.

PUF circuit 202 produces a physical unclonable function output. By reading this output, system 200 provides a status of the security seal. If the package has been opened or tampered with, the output of MEMS 204 would change and be reported to PUF circuit 202. This would, in turn, change the output of PUF circuit 202 when a challenge input is provided to PUF circuit 202.

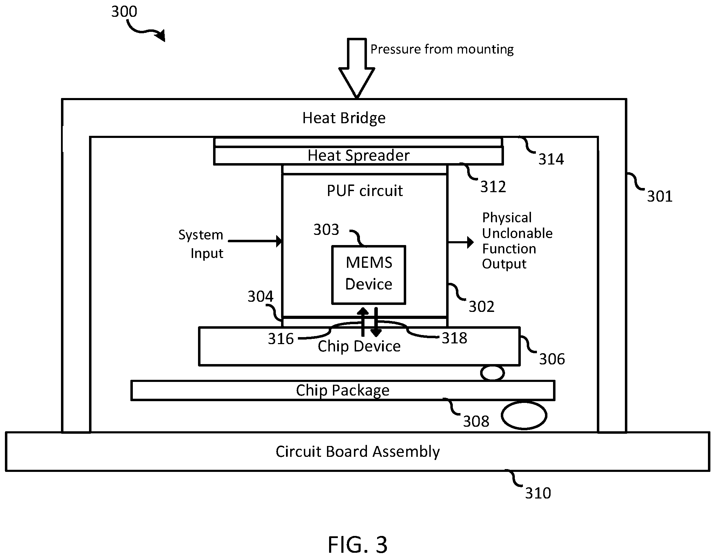

FIG. 3 is a block diagram of another embodiment of a system 300 that extends trust to a mechanical system with a mechanical assembly 301 that includes PUF circuit 302 in which is embedded a MEMS device 303 that is enabled to extend the trust of the PUF circuit 302 to the mechanical assembly 301. In this example, PUF circuit 302 is mounted on a chip device 306 through an interface 304. Further, chip device 306 is mounted on a chip package 308 which is mounted, in turn, on circuit board assembly 310. Further, heat spreader 312 is mounted between PUF circuit 302 and heat bridge 314 which encloses the components of system 300 to create mechanical assembly 301. Once fabricated, pressure is exerted on the components within mechanical assembly 301 which is sensed by MEMS device 303.

In this embodiment, PUF circuit 302 receives a system input (challenge) and produces a physical unclonable function output (response) that indicates whether the mechanical assembly 301 has been tampered with based on output from MEMS device 303. For example, MEMS device 303 may be pressure sensitive and may detect changes in mechanical assembly 301 due to, for example, changes in pressure caused by changes to mechanical assembly 301. Such changes are reflected in the output of PUF circuit 302 and thus MEMS device 303 extends the trust provided by PUF circuit 302 to mechanical assembly 301.

In a security application, it may be desirable to have the challenge (system input) and the response (PUF output) to be observable external to system 300. In such a case, chip device 306 provides the challenge (system input 316) and receives the response (PUF output 318). This provides the PUF validation at the hardware level to determine whether system 300 is good (not compromised). For example, this embodiment could be used to verify that system 300 is still under warranty because the assembly has not been opened.

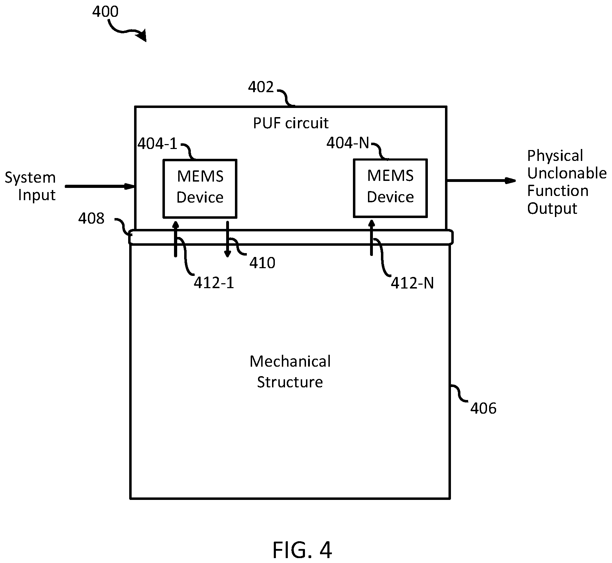

FIG. 4 is a block diagram of another embodiment of a system 400 that includes PUF circuit 402 with a plurality of embedded MEMS devices 404-1 to 404-N to extend the trust of the PUF circuit 402 to an attached mechanical structure 406. In this embodiment, PUF circuit 402 operates on a large mechanical structure 406 that is attached to PUF circuit 402 by interface 408. System 400 is similar to system 100 of FIG. 1 except that system 400 includes a plurality of MEMS devices 404-1 to 404-N. In this embodiment, MEMS device 404-1 injects a small mechanical signal, e.g., a vibration signal 410 into mechanical structure 406. Each MEMS device 402-1 to 402-N generates a PUF value based on the vibration signal 410 at different points along the material that makes up mechanical structure 406. If changes occur to mechanical structure 406, such as breaking the material apart that forms mechanical structure 406, the path of vibration in response to vibration signal 410 would also change and hence the PUF response from the associated MEMS sensor 402-1 to 402-N would also change along with the output of PUF circuit 402.

FIGs. 5A and 5B illustrate another embodiment of a PUF circuit that extends trust to a mechanical structure. As described above with respect to FIG. 1, in this embodiment, FIG. 5A illustrates that PUF circuit 502 has a Swiss Cheese structure including a number of openings 504 that are formed in PUF circuit 502. As shown in FIG. 5B, PUF circuit 502 is attached to mechanical structure 508 using an adhesive or potting material 506 that surrounds PUF circuit 502 and passes through openings 504. In some embodiments, adhesive or potting material 506 also covers the edges of PUF circuit 502 so that PUF circuit 502 is completely covered by adhesive or potting material 506. Advantageously, the Swiss Cheese pattern of openings 504 adds to complexity of the interface between PUF circuit 502 with its embedded MEMS device and mechanical structure 508. This structure further increases the difficulty in tampering with or interfering with the operation of PUF Circuit 502 and thus improves the extension of trust from PUF Circuit 502 to mechanical structure 508.

FIG. 6 is a flow chart of one embodiment of a method 600 for extending trust of a Physically Unclonable Function (PUF) circuit to a mechanical structure. Method 600 may be implemented in any appropriate PUF circuit, such as the PUF circuits shown and described above with respect to any one or more of FIGs. 1-4.

Method 600 begins at 601 with a PUF circuit that includes an embedded MEMS device. In one embodiment, the MEMS device is sensitive to one or more of temperature, vibration, pressure or motion. In other embodiments, the MEMS device is sensitive to physical placement and modification of the mechanical structure. In further embodiments, the MEMS device senses a response to a small mechanical signal injected into the mechanical structure. The embedded MEMS device detects a parameter or a characteristic of the mechanical structure. At block 603, method 600 receives a challenge at an input of the PUF circuit. At block 605, the PUF circuit generates a PUF output that is based on, or influenced by, the output of the MEMS device. If the MEMS device detects a change in the parameter or characteristic of the mechanical structure, the output of the MEMS device will change, and thus, the output of the PUF circuit would also change. Therefore, a change in the output of the PUF circuit, aided by the MEMS device, indicates that there has been a change in the underlying mechanical structure. Thus, method 600 extends the trust of a PUF circuit to a mechanical structure by embedding a MEMS device in the PUF circuit. At block 607, method 600 optionally provides the response of the PUF circuit to an external system.

### System of nodes that extend trust to mechanical structures using PUFs with embedded MEMS Devices

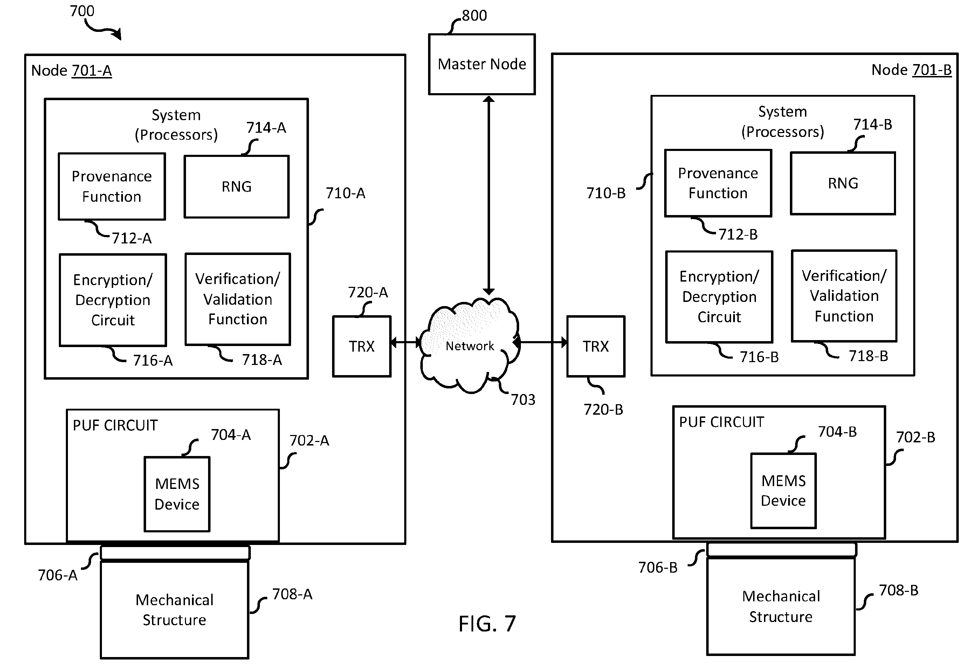

FIG. 7 is a block diagram of a system 700 that includes secure communication between nodes 701 that extend PUF-based trust to mechanical structures using embedded MEMS devices in an exclusive community over network 703. Examples of systems that provide PUF-based extension of trust to mechanical structures using embedded MEMS devices are described in more detail above with respect to FIGs. 1, 2, 3, 4 and 5.

In FIG. 7, system 700 is illustrated with two nodes 701 labelled as node 701-A and node 701-B. It is understood that system 700 may include any appropriate number of nodes 701 and thus system 700 is not limited to a system with two nodes 701. Further, FIG. 7 illustrates node 701-A is coupled to node 701-B over network 703. It is understood that network 703 may comprise one or more of a wireless access point, comm link, wide area network (WAN), local area network (LAN) such as an Ethernet network, cable group, optical fiber, direct connection or any other appropriate system for communicatively coupling nodes 701 of system 700.

In system 700, node 701-A and node 701-B each include similar components for secure communication and for PUF-based extension of trust to mechanical structures. Therefore, for simplicity and brevity, only node 701-A is described in detail using reference numerals for each component followed by the designator "-A." It is understood that similar components are also included in Node 701-B identified by the same reference numeral followed by the designator "-B."

Node 701-A includes PUF circuit 702-A with embedded MEMS device 704-A to support PUF-based extension of trust to mechanical structure 708-A through interface 706-A. As mentioned above, various embodiments of PUF circuits are shown and described with respect to FIGs. 1, 2, 3, 4, 5A, 5B, and 6.

Node 701-A also includes system 710-A with one or more processors and memory for storing software or instructions to implement functions for secure communication for node 701-A. Thus, system 710-A enables PUF circuit 702-A to extend trust to mechanical structure 708-A by establishing a secure communication channel over network 703 with another node. Through this secure communication channel, PUF circuit 702-A is enabled to receive a challenge input from the other node. Further, through this secure communication channel, PUF circuit 702-A is enabled to securely transmit the response that is produced, in part, based on the output of MEMS 704-A, such that the trust created by PUF circuit 702-A is extended to mechanical structure 708-A by securely communicating the response over network 703 to the node 701 that initiated the challenge to node 701-A.

System 710-A includes provenance function 712-A, random number generator (RNG) 714-A, encryption/decryption circuit 716-A, and verification/validation function 718-A. RNG 714-A uses random data to produce random numbers used by encryption/decryption circuit 716-A to send and receive data securely over network 703. Further, provenance function 712-A uses unique data to implement a second physical unclonable function (PUF) for node 701-A. Node 701-A also uses provenance function 712-A in conjunction with verification/validation function 718-A to implement authentication that data received or transmitted by node 701-A is from an authorized node in system 700. In one embodiment, RNG 714-A receives random data and provenance function 712-A receives unique data harvested from a MEMS device, such as MEMS device 704-A, using the techniques described in co-pending application serial number _ (attorney docket number H232672-US2) incorporated by reference above.

In FIG. 7, system 700 also includes a master node 800 that is used to set up or manage the trusted relationship amongst the nodes 701 of system 700 that are in the exclusive community. Specifically, in one embodiment, system 700 uses registry entries to set up/manage the trusted relationship. To do this, for example, each respective node 701 generates a number of registries (e.g., thousands or tens of thousands of registries) using provenance function 712 and the unique data (such as harvested from a MEMS device as taught in the '672 application). These registries uniquely identify the specific node 701 as part of the trusted system 700. Master node 800 obtains the registries generated by each node 701, e.g., at the time a node is set up, and provides the registries to all other nodes 701 in system 700. These registries are stored as part of the provenance function 712 of each node 701 in the exclusive community and become, in effect, a library of authorized users in the exclusive community for system 700. By using these registry values, a given node will only recognize data received from like-equipped nodes. When data is received over network 703, the receiving node will use the registries in provenance function 712 along with verification/validation function 718 to authenticate the input as originating with an authorized user. For example, the receiving node can verify that the node 701 sending the data has produced an output of a provenance function 712 that corresponds to one of the registries provided by master node 800 and included in its own provenance function 712.

Node 701-A also includes a transceiver 720-A that provides an interface for communicating with other nodes 701, e.g., node 701-B, over network 703. While a single transceiver 720-A is shown in FIG. 7, it should be understood that the single transceiver 720-A could be replaced with separate and distinct transmitter and receiver components.

In other embodiments, master node 800 may use a mechanism other than registry values to set up or manage the trusted relationship amongst the node 701. For example, in another embodiment, master node 800 plays the role of a certificate authority / certification authority (CA) for applications that use asymmetric cryptography and where the CA could issue digital certificates.

### Glossary

The following terms are defined for purpose of this specification and apply to the various embodiments described in more detail above.

**Random Bit Generator (RBG):** A device or algorithm that outputs a random sequence that is effectively indistinguishable from statistically independent and unbiased bits.

**Deterministic Random Bit Generator (DRBG):** An RBG that includes a DRBG mechanism and (at least initially) has access to a source of entropy input. The DRBG produces a sequence of bits from a secret initial value called a seed, along with other possible inputs. A DRBG is often called a Pseudorandom Number (or Bit) Generator.

**Entropy Source:** The combination of a noise source, health tests, and an optional conditioning component that produce random bitstrings to be used by an RBG.

**Noise source:** The component of an entropy source that contains the nondeterministic, entropy-producing activity. (e.g., thermal noise or hard drive seek times).

**True Random Number Generator:** A device or algorithm that extracts randomness from physical phenomena to generate numbers.

**Random Number Generator:** A device or algorithm that generates a sequence of numbers or symbols that cannot be reasonably predicted better than by random chance.

In various aspects, system elements, method steps, or examples described throughout this disclosure (such as the devices, system, or components thereof, for example) may be implemented on one or more computer systems including a central processing unit (CPU), graphics processing unit (GPU), field programmable gate array (FPGA), application specific integrated circuit (ASIC) and/or similar devices comprising hardware executing code to realize those elements, processes, or examples, said code stored on a non-transient data storage device. These devices include or function with software programs, firmware, or other computer readable instructions for carrying out various methods, process tasks, calculations, and control functions.

These instructions are typically stored on any appropriate non-transitory computer readable medium used for storage of computer readable instructions or data structures. The computer readable medium can be implemented as any available media that can be accessed by a general purpose or special purpose computer or processor, or any programmable logic device. Suitable processor-readable media may include storage or memory media such as magnetic or optical media. For example, storage or memory media may include conventional hard disks, Compact Disk-Read Only Memory (CD-ROM), volatile or non-volatile media such as Random Access Memory (RAM) (including, but not limited to, Synchronous Dynamic Random Access Memory (SDRAM), Double Data Rate (DDR) RAM, RAMBUS Dynamic RAM (RDRAM), Static RAM (SRAM), etc.), Read Only Memory (ROM), Electrically Erasable Programmable ROM (EEPROM), and flash memory, etc. Suitable processor-readable media may also include transmission media such as electrical, electromagnetic, or digital signals, conveyed via a communication medium such as a network and/or a wireless link.

The methods and techniques described here may be implemented, in part, in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magnetooptical disks; and DVD disks. Any of the foregoing may be supplemented by, or incorporated in, specially designed application-specific integrated circuits (ASICs).

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

Example 1 includes a system comprising: a physical unclonable function (PUF) circuit having an input, an output and an embedded microelectromechanical system (MEMS) device; and an interface, coupled to the PUF circuit, and being configured to be coupled to a mechanical structure; wherein the embedded MEMS device is configured to detect a parameter or characteristic associated with the mechanical structure and to provide an input to the PUF circuit based on the detected parameter, whereby the PUF circuit uses the input from the embedded MEMS device to extend trust to the mechanical structure.

Example 2 includes the system of example 1, wherein the embedded MEMS device has resistance, inductance, and capacitance (RLC) properties that change in response to the parameter or characteristic of the mechanical structure.

Example 3 includes the system of any of examples 1 and 2, wherein the MEMS device comprises a MEMS sensor that is configured to detect changes in a surface of the mechanical structure.

Example 4 includes the system of any of examples 1 to 3, wherein the interface comprises an adhesive, a potting material, welding, and other appropriate methodologies to establish a physical relationship between the PUF circuit and the mechanical structure.

Example 5 includes the system of any of examples 1 to 4, wherein the MEMS device comprises a MEMS sensor that is sensitive to physical placement and modification of the mechanical structure.

Example 6 includes the system of any of examples 1 to 5, wherein the MEMS device is sensitive to one or more of temperature, vibration, pressure, or motion.

Example 7 includes the system of any of examples 1 to 6, wherein the MEMS device is configured to inject a small mechanical signal into the mechanical structure and is further configured to sense a response from the mechanical structure to the small mechanical signal.

Example 8 includes the system of any of examples 1 to 7, and further comprising an interface for providing communication between the PUF circuit and an external system.

Example 9 includes the system of any of examples 1 to 8, wherein the MEMS device is configured to detect changes to a characteristic or property of a security seal.

Example 10 includes the system of any of examples 1 to 9, wherein the PUF circuit includes a plurality of MEMS devices, wherein one of the plurality of MEMS devices is configured to inject a small mechanical signal into the mechanical structure and each of the plurality of MEMS devices is configured to sense a response from the mechanical structure to the small mechanical signal.

Example 11 includes a system comprising: a chip device; a physical unclonable function (PUF) circuit having an input, an output and an embedded microelectromechanical system (MEMS) device; an interface, coupled between the PUF circuit and the chip device; a circuit board assembly, wherein the chip device is coupled to the circuit board assembly; a heat bridge coupled to the circuit board assembly and enclosing the chip device, the interface and the PUF circuit, wherein the circuit board assembly and the heat bridge form a mechanical assembly; and a heat spreader, mounted between the PUF circuit and the heat bridge; wherein the PUF circuit receives a challenge at the input and produces a PUF response at the output, wherein the PUF response indicates whether the mechanical assembly has been tampered with based on the output of the MEMS device.

Example 12 includes the system of example 11, wherein the MEMS device comprises a MEMS sensor that senses pressure within the mechanical assembly.

Example 13 includes the system of any of examples 11 and 12, wherein the PUF response indicates the mechanical assembly has been tampered with when the MEMS sensor detects a change in pressure with the mechanical assembly.

Example 14 includes the system of any of examples 11 to 13, wherein the response at the PUF output is communicated to a device that is external to the mechanical assembly.

Example 15 includes the system of any of examples 11 to 14, wherein the chip device is configured to provide the challenge to the input of the PUF circuit and receives the response from the output of the PUF circuit.

Example 16 includes a method for extending trust of a physically unclonable function (PUF) circuit to a mechanical structure, the method comprising: detecting a parameter or characteristic of the mechanical structure with a microelectromechanical system (MEMS) device embedded in the PUF circuit, wherein the PUF circuit is coupled to the mechanical structure through an interface; and receiving a challenge at an input to the PUF circuit; generating a response based on an output of the MEMS device that reflects the parameter or characteristic of the mechanical structure.

Example 17 includes the method of example 16, and further providing the response to an external system.

Example 18 includes the method of any of examples 16 to 17, wherein detecting a parameter or characteristic of the mechanical structure comprises detecting the characteristic or parameter with a MEMS device that is sensitive to one or more of temperature, vibration, pressure, or motion.

Example 19 includes the method of any of examples 16 to 18, wherein detecting a parameter or characteristic of the mechanical structure comprises detecting the characteristic or parameter with a MEMS device that is sensitive to physical placement and modification of the mechanical structure.

Example 20 includes the method of any of examples 16 to 19, wherein detecting a parameter or characteristic of the mechanical structure comprises injecting a small mechanical signal into the mechanical structure with the MEMS device, and sensing a response from the mechanical structure to the small mechanical signal.

## Claims

1. A system comprising:
a physical unclonable function (PUF) circuit (102) having an input, an output and an embedded microelectromechanical system (MEMS) device (104); and
an interface (114), coupled to the PUF circuit, and being configured to be coupled to a mechanical structure (106);
wherein the embedded MEMS device is configured to detect a parameter or characteristic associated with the mechanical structure and to provide an input to the PUF circuit based on the detected parameter, whereby the PUF circuit uses the input from the embedded MEMS device to extend trust to the mechanical structure.

2. The system of claim 1, wherein the embedded MEMS device has resistance, inductance, and capacitance (RLC) properties that change in response to the parameter or characteristic of the mechanical structure.

3. The system of claim 1, wherein the MEMS device comprises a MEMS sensor that is configured to detect changes in a surface of the mechanical structure.

4. The system of claim 1, wherein the interface comprises an adhesive, a potting material, welding, and other appropriate methodologies to establish a physical relationship between the PUF circuit and the mechanical structure.

5. The system of claim 1, wherein the MEMS device is configured to inject a small mechanical signal (110) into the mechanical structure and is further configured to sense a response (112) from the mechanical structure to the small mechanical signal.

6. The system of claim 1, wherein the MEMS device is configured to detect changes to a characteristic or property of a security seal (202).

7. The system of claim 1, wherein the PUF circuit includes a plurality of MEMS devices, wherein one of the plurality of MEMS devices is configured to inject a small mechanical signal into the mechanical structure and each of the plurality of MEMS devices is configured to sense a response from the mechanical structure to the small mechanical signal.

8. A method for extending trust of a physically unclonable function (PUF) circuit to a mechanical structure, the method comprising:
detecting a parameter or characteristic of the mechanical structure with a microelectromechanical system (MEMS) device embedded in the PUF circuit, wherein the PUF circuit is coupled to the mechanical structure through an interface (601);
receiving a challenge at an input to the PUF circuit (603); and
generating a response based on an output of the MEMS device that reflects the parameter or characteristic of the mechanical structure (605).

9. The method of claim 8, wherein detecting a parameter or characteristic of the mechanical structure comprises detecting the characteristic or parameter with a MEMS device that is sensitive to one or more of temperature, vibration, pressure, or motion.

10. The method of claim 8, wherein detecting a parameter or characteristic of the mechanical structure comprises injecting a small mechanical signal into the mechanical structure with the MEMS device, and sensing a response from the mechanical structure to the small mechanical signal.
